# EUROPEAN PATENT SPECIFICATION

(11) **EP 3 486 472 B1**
(45) Date of publication and mention of the grant of the patent: **09.12.2026**
(21) Application number: 18197606.9
(22) Date of filing: 28.09.2018
(51) Int. Cl.: F02F 7/00, F02M 35/10

(54) **ATTACHMENT MECHANISM FOR ELECTRONIC EQUIPMENT FOR ENGINE**
BEFESTIGUNGSMECHANISMUS FÜR ELEKTRONISCHE AUSRÜSTUNG FÜR MOTOR
MÉCANISME DE FIXATION POUR ÉQUIPEMENT ÉLECTRONIQUE DE MOTEUR

(30) Priority: 15.11.2017 JP 2017220304
(43) Date of publication of application: 22.05.2019
(73) Proprietor: TOYOTA JIDOSHA KABUSHIKI KAISHA, Toyota-shi, Aichi-ken, 471-8571 (JP)
(72) Inventor: KAWAMURA, Hiroshi, Toyota-shi, Aichi-ken, 471-8571 (JP)
(74) Representative: D Young & Co LLP

(56) References cited:
- EP-A1- 1 852 884
- EP-A1- 2 693 023
- CN-U- 203 978 605
- JP-A- 2013 124 714
- JP-A- H10 223 111
- US-A- 5 813 886
- US-A1- 2004 007 212
- US-B1- 6 170 516

## Description

### BACKGROUND OF THE INVENTION

### 1. Field of the Invention

The invention relates to an attachment mechanism for electronic equipment for an engine.

### 2. Description of Related Art

In some cases, electronic equipment such as a cam angle sensor is attached to a head cover covering a cylinder head of an engine (refer to, for example, Japanese Unexamined Patent Application Publication No. 2010-261361 (JP 2010-261361 A)). Alternative solutions for attaching an electronic equipment to an engine are known from JP 2013 124714 A or EP 2 693 023 A1.

### SUMMARY OF THE INVENTION

The electronic equipment may be adversely affected once vibration from the engine is transmitted to the electronic equipment. Desirable in this regard is damping of the vibration during the transmission of the vibration from the engine to the electronic equipment. In a case where the engine is mounted in a vehicle or the like, damping of the vibration as described above by means of a simple configuration is desired for surrounding spatial constraints. Based on the structure of the engine, a direction in which the vibration is likely to become significant is determined in advance.

The invention provides an attachment mechanism for electronic equipment for an engine with which vibration from an engine can be effectively damped by means of a simple configuration. The invention is defined in the claims.

An aspect of the invention relates to a system comprising: a head cover (4R, 4L) for an engine (1); and an attachment mechanism for electronic equipment for an engine. The attachment mechanism includes a bracket configured to hold the electronic equipment and a plurality of support portions configured to elastically support the bracket with respect to the head cover covering a cylinder head of the engine (hereinafter, referred to as a "head cover"). The support portions are disposed on the head cover such that a maximum distance between two support portions of the support portions in a direction parallel to a shaft center of a crankshaft of the engine is longer than a maximum distance between the two support portions of the support portions in a direction perpendicular to the shaft center of the crankshaft of the engine.

In the system according to the aspect of the invention, the system may comprises the electronic equipment and the electronic equipment may include any one of a sensor, an electromagnetic valve, and a driver device driving a direct injection injector of the engine.

In the system according to the aspect of the invention, the electronic equipment may be a pressure sensor connected to a pipe that is arranged to communicate with either an intake system or an exhaust system of the engine. The bracket may be configured to hold the pressure sensor at a position vertically above a part where the pipe and the intake system or the exhaust system communicate with each other. The bracket may include a bottom wall portion attached to the head cover by the support portions and a side wall portion that extends vertically upward from the bottom wall portion and holds the pressure sensor.

In the system according to the aspect of the invention, the bottom wall portion may include a notch portion configured to allow the pipe to pass through the notch portion between the support portions.

In the system according to the aspect of the invention, the support portion may include an elastic body interposed between the head cover and the bottom wall portion.

According to the aspect of the invention, a system comprising an attachment mechanism for electronic equipment for an engine with which vibration from an engine can be effectively damped by means of a simple configuration can be provided.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a schematic drawing in which an engine is seen from a direction along the shaft center of a crankshaft;
FIG. 1B is a schematic drawing in which the engine is seen from a direction orthogonal to the shaft center of the crankshaft;
FIG. 2A is an explanatory diagram of an attachment mechanism;
FIG. 2B is a sectional view of a support portion; and
FIG. 3 is a graph illustrating an excitation frequency-vibration magnification relationship in a case where vibration has been applied to an object supported by a spring.

### DETAILED DESCRIPTION OF EMBODIMENTS

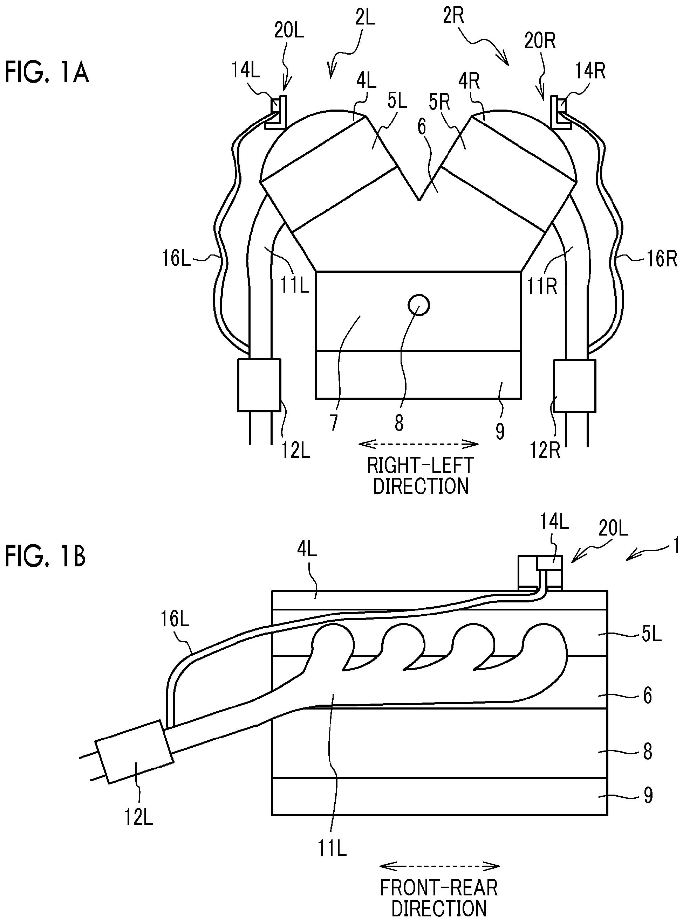

FIG. 1A is a schematic drawing in which an engine 1 is seen from a direction along the shaft center of a crankshaft 8. FIG. 1B is a schematic drawing in which the engine 1 is seen from a direction orthogonal to the shaft center of the crankshaft 8. The right-left direction of the engine 1 is illustrated in FIG. 1A. The front-rear direction of the engine 1 is illustrated in FIG. 1B. The front-rear direction of the engine 1 is a direction perpendicular to the page of FIG. 1A. The right-left direction of the engine 1 is a direction perpendicular to the page of FIG. 1B. The front-rear direction of the engine 1 is a direction parallel to the shaft center of the crankshaft 8. The right-left direction of the engine 1 is a direction perpendicular to the shaft center of the crankshaft 8. The engine 1 is mounted in, for example, a vehicle.

The engine 1 is a V-type engine that has a pair of banks 2R, 2L protruding in a V-shape on a cylinder block 6. The banks 2R, 2L are provided with cylinder heads 5R, 5L installed on the upper end portion of the cylinder block 6 and head covers 4R, 4L respectively attached to the upper ends of the cylinder heads 5R, 5L, respectively. Four cylinders are disposed for each of the banks 2R, 2L in the cylinder block 6. A piston is disposed in each of the cylinders. Each of the pistons is connected to the crankshaft 8 so as to transmit power to the crankshaft 8. Furthermore, a crankcase 7 is attached to the lower side of the cylinder block 6. An oil pan 9 as an oil reservoir is arranged beneath the crankcase 7. Exhaust passages 11R, 11L are connected to the cylinder heads 5R, 5L, respectively. Particulate filters 12R, 12L are disposed on the exhaust passages 11R, 11L, respectively. Intake passages (not illustrated) are connected to the cylinder heads 5R, 5L, respectively.

The head covers 4R, 4L are provided with sensors 14R, 14L, respectively. Specifically, the sensors 14R, 14L are attached on the head covers 4R, 4L by attachment mechanisms 20R, 20L, respectively. The sensor 14L is connected to the upstream side of the particulate filter 12L via a pipe 16L. Likewise, the sensor 14R is connected to the upstream side of the particulate filter 12R via a pipe 16R. The sensors 14R, 14L are sensors detecting the pressures of the upstream sides of the particulate filters 12R, 12L, respectively. However, the invention is not limited thereto, and the sensors 14R, 14L may detect the pressures of the downstream sides of the particulate filters 12R, 12L instead.

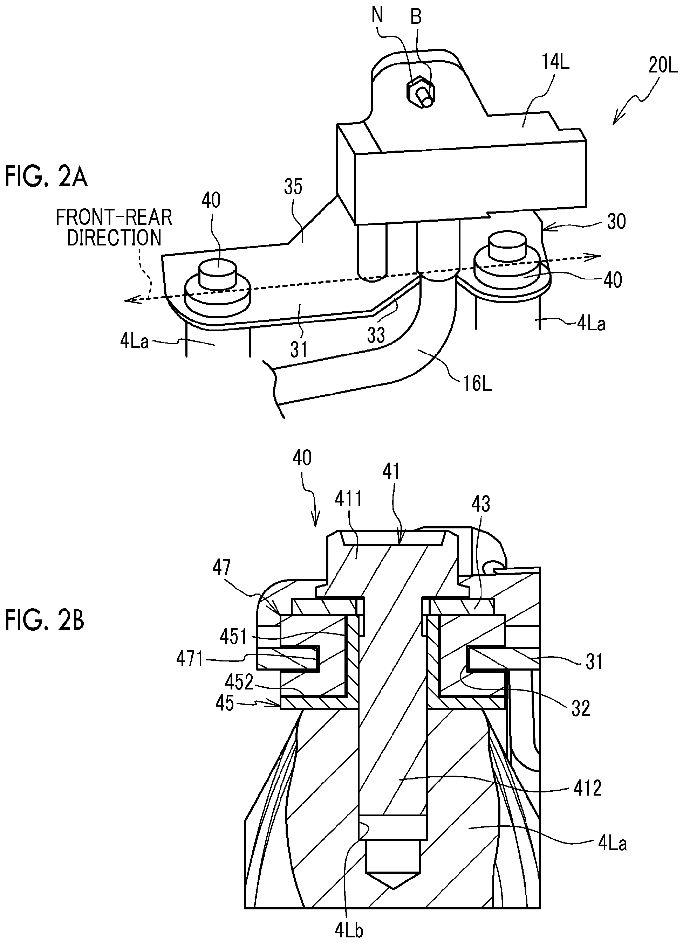

The attachment mechanism 20L will be described in detail below. The attachment mechanism 20R has almost the same configuration as the attachment mechanism 20L, and thus description of the attachment mechanism 20R will be omitted. FIG. 2A is an explanatory diagram of the attachment mechanism 20L. The attachment mechanism 20L has a bracket 30 and support portions 40. The bracket 30 has a bottom wall portion 31 and a side wall portion 35 extending vertically upward from the bottom wall portion 31. The bottom wall portion 31 has a flat plate shape, and the front-rear direction of the engine 1 is the longitudinal direction of the bottom wall portion 31. In the head cover 4L, two projecting portions 4La protrude vertically upward. The bottom wall portion 31 is attached to the projecting portions 4La by the two support portions 40. The two support portions 40 and the two projecting portions 4La are apart from each other respectively in the front-rear direction of the engine 1. In the bottom wall portion 31, a notch portion 33 is formed between the two support portions 40, which will be described in detail later. The sensor 14L is fixed to the side wall portion 35 by a bolt B and a nut N.

FIG. 2B is a sectional view of the support portion 40. The support portion 40 includes a bolt 41, a washer 43, a spacer 45, and a grommet 47. The bolt 41 has a head portion 411 and a shaft portion 412 that is smaller in diameter than the head portion 411, is long in the axial direction thereof, and has a screw groove formed in the outer periphery thereof. The head portion 411 is screwed into a screw hole 4Lb formed in the projecting portion 4La through a hole 32 formed in the bottom wall portion 31. The spacer 45 is made of metal and has a tubular portion 451 and a disk-shaped disk portion 452 radially expanding from the tubular portion 451. The shaft portion 412 of the bolt 41 penetrates the tubular portion 451 of the spacer 45. The disk portion 452 is in contact with the upper end surface of the projecting portion 4La. The washer 43 is made of metal and is positioned between the grommet 47 and the head portion 411 of the bolt 41. In other words, the grommet 47 is sandwiched between the washer 43 and the disk portion 452 of the spacer 45. The grommet 47 is made of rubber and has a substantially annular shape. In the circumferential direction of the grommet 47, a recessed portion 471 is formed in the circumferential direction. The grommet 47 is fitted to the outside of the tubular portion 451 of the spacer 45, the recessed portion 471 of the grommet 47 is fitted with the hole 32 of the bottom wall portion 31, and the grommet 47 is sandwiched between the washer 43 and the disk portion 452 of the spacer 45 as described above.

In the above-described manner, the bottom wall portion 31 of the bracket 30 is fixed to the screw hole 4Lb of the projecting portion 4La via the grommet 47. In other words, the support portion 40 elastically supports the bracket 30 with respect to the head cover 4L of the engine. Accordingly, vibration of the engine 1 is damped by the grommet 47 and transmission of significant vibration to the bracket 30 and the sensor 14L held by the bracket 30 is suppressed.

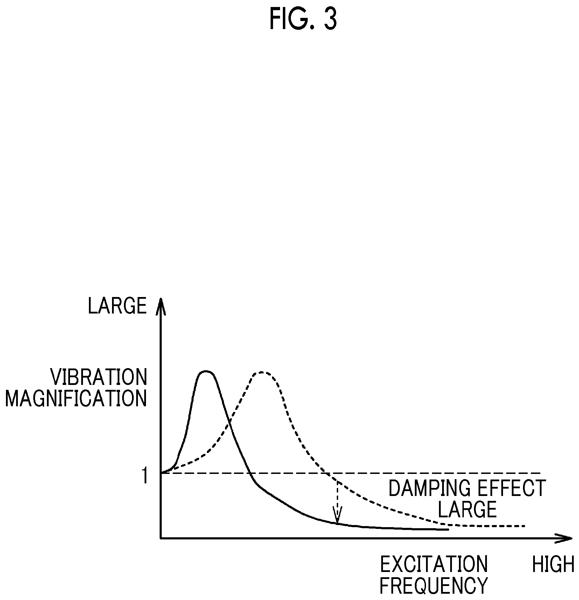

The two support portions 40 are disposed along the front-rear direction of the engine 1 as illustrated in FIG. 2A, and thus vibration of the bracket 30 in the right-left direction of the engine 1 can be effectively damped with respect to vibration of the bracket 30 in the front-rear direction of the engine 1. The reason will be described below. FIG. 3 is a graph illustrating an excitation frequency-vibration magnification relationship in a case where vibration has been applied to an object supported by a spring. The horizontal axis represents an excitation frequency, and the vertical axis represents a vibration magnification. The dotted line represents a case where a spring constant K is large, and the solid line represents a case where the spring constant K is small. It is known that a resonance peak frequency decreases as the spring constant K decreases. Accordingly, the region of the excitation frequency with a vibration magnification of 1 or less increases as the spring constant K decreases. In other words, it is shown that vibration is effectively damped when the spring constant K is small.

In this example, the two support portions 40 are disposed along the front-rear direction of the engine 1 as described above. Accordingly, it can be regarded that the bracket 30 is supported by merely one of the support portions 40 with respect to vibration of the engine 1 in the right-left direction whereas the bracket 30 is supported by the two support portions 40 with respect to vibration of the engine 1 in the front-rear direction. Therefore, it can be regarded that the spring constant of a spring supporting the bracket 30 with respect to vibration of the engine 1 in the right-left direction is smaller than the spring constant of a spring supporting the bracket 30 with respect to vibration of the engine 1 in the front-rear direction. As a result, vibration of the bracket 30 in the right-left direction of the engine 1 can be effectively damped with respect to the front-rear direction of the engine 1.

In the V-type engine 1, the banks 2R, 2L resonate in the arc direction about the crankshaft 8 in some cases due to reciprocation of the pistons respectively disposed in the banks 2R, 2L. As a result, vibration of the engine 1 in the right-left direction exceeds vibration of the engine 1 in the front-rear direction. Accordingly, vibration of the bracket 30 in the right-left direction of the engine 1 can be effectively damped by means of a simple configuration in which the two support portions 40 are disposed along the front-rear direction of the engine 1 as described above. As a result, adverse effects on the sensor 14L held by the bracket 30 also can be further suppressed. Since the attachment mechanism 20L has a simple configuration as described above, the attachment mechanism 20L can be adopted even in a case where the space surrounding the engine 1 is narrow. Although the engine 1 vibrates also in the up-down direction due to the reciprocation of the pistons in the banks 2R, 2L, the vibration in the up-down direction also can be damped by the grommets 47 of the two support portions 40.

As illustrated in FIGS. 1A and 1B, the pipe 16L is connected to the sensor 14L and the pipe 16L communicates with the exhaust passage 11L. Exhaust gas flowing through the exhaust passage 11L may cause condensed water to be generated in the pipe 16L. Here, the sensor 14L is attached to the head cover 4L by the attachment mechanism 20L, and thus is positioned vertically above the part where the pipe 16L and the exhaust passage 11L are interconnected. The side wall portion 35 of the bracket 30 is positioned vertically above the bottom wall portion 31 and holds the sensor 14L, and thus the sensor 14L is held by the bracket 30 on a vertically higher side. As a result, the part of the pipe 16L that is connected to the sensor 14L is positioned on a vertically higher side, and discharge of the condensed water generated in the pipe 16L into the exhaust passage 11L is promoted by gravity. As a result, the impact of condensed water accumulation in the pipe 16L on the detection accuracy of the sensor 14L can be further suppressed.

The end portion of the pipe 16L on the sensor 14L side passes through the notch portion 33 formed in the bottom wall portion 31 as illustrated in FIG. 2A, and interference with the bottom wall portion 31 is suppressed. As a result, the end portion of the pipe 16L on the sensor 14L side can be routed vertically downward, and the degree of freedom of routing of the pipe 16L is improved.

Although an example of the invention has been described in detail above, the invention is not limited to the above-described specific example and can be modified and changed in various forms within the scope of the invention set forth in the claims.

Although the two support portions 40 are arranged along the front-rear direction of the engine 1 as described above, this does not mean that the line segment interconnecting the two support portions 40 is needed to be parallel to the front-rear direction of the engine 1. Alternatively, the line segment may be inclined to some extent with respect to the front-rear direction. In other words, the distance between the two adjacent support portions 40 in the front-rear direction of the engine 1 may be longer than the distance between the two adjacent support portions 40 in the right-left direction of the engine 1. Although the two support portions 40 are disposed along the front-rear direction of the engine 1 in the above-described example, three or more support portions 40 may be disposed along the front-rear direction of the engine 1 instead. A coil spring, an annular leaf spring, or the like may be adopted instead of the grommet 47.

Although a V-type engine has been exemplified in this example, the invention is also applicable to an in-line engine. Also in a case where the invention is applied to an in-line engine, vibration of the engine in the right-left direction exceeds vibration of the engine in the front-rear direction as a result of rotation of the crankshaft 8.

In the above-described example, a sensor detecting the internal pressure of an exhaust system has been described as an example of electronic equipment. However, the invention is not limited thereto. For example, the electronic equipment may also be a pressure sensor connected to a pipe communicating with either the intake system or the exhaust system of an engine. The electronic equipment may also be an electromagnetic valve such as a vacuum switching valve for purging or a driver device driving a direct injection injector of an engine. This is because any of the electronic equipment can be installed near the head cover of the engine and may be affected by transmission of significant vibration.

## Claims

1. A system comprising:
a head cover (4R, 4L) for an engine (1); and
an attachment mechanism (20R, 20L) for electronic equipment for the engine (1), the attachment mechanism (20R, 20L) comprising:
a bracket (30) configured to hold the electronic equipment; and
two support portions (40) configured to elastically support the bracket (30) with respect to the head cover (4R, 4L) of the engine (1), wherein the bracket (30) is supported by merely one of the support portions (40) with respect to vibration of the engine (1) in the right-left direction whereas the bracket (30) is supported by the two support portions (40) with respect to vibration of the engine (1) in the front-rear direction, the two support portions (40) being disposed on the head cover (4R, 4L) such that a maximum distance between the two support portions (40) in a direction parallel to a shaft center of a crankshaft (8) of the engine (1) is longer than a maximum distance between the two support portions (40) in a direction perpendicular to the shaft center of the crankshaft (8) of the engine (1);
wherein the system further comprises the electronic equipment and the electronic equipment includes any one of a sensor (14R, 14L), an electromagnetic valve, and a driver device driving a direct injection injector of the engine (1).

2. The system according to claim 1, wherein:
the electronic equipment is a pressure sensor connected to a pipe (16R, 16L) that is arranged to communicate with either an intake system or an exhaust system of the engine (1);
the bracket (30) is configured to hold the pressure sensor at a position vertically above a part where the pipe and the intake system or the exhaust system communicate with each other; and
the bracket (30) includes a bottom wall portion (31) attached to the head cover (4R, 4L) by the two support portions (40) and a side wall portion (35) that extends vertically upward from the bottom wall portion (31) and holds the pressure sensor.

3. The system according to claim 2, wherein the bottom wall portion (31) includes a notch portion (33) configured to allow the pipe (16R, 16L) to pass through the notch portion (33) between the two support portions (40).

4. The system according to claim 2 or 3, wherein the two support portions (40) includes an elastic body interposed between the head cover (4R, 4L) and the bottom wall portion (31).

## Patentansprüche

1. System, das Folgendes umfasst:
einen Kopfdeckel (4R, 4L) für einen Motor (1); und
einen Befestigungsmechanismus (20R, 20L) für eine elektronische Ausrüstung für den Motor (1), wobei der Befestigungsmechanismus (20R, 20L) Folgendes umfasst:
eine Halterung (30), die dazu ausgelegt ist, die elektronische Ausrüstung zu halten; und
zwei Lagerabschnitte (40), die dazu ausgelegt sind, die Halterung (30) in Bezug auf den Kopfdeckel (4R, 4L) des Motors (1) elastisch zu lagern, wobei die Halterung (30) in Bezug auf eine Vibration des Motors (1) in der Richtung von rechts nach links nur durch einen der Lagerabschnitte (40) gelagert ist, wohingegen die Halterung (30) in Bezug auf eine Vibration des Motors (1) in der Richtung von der Front zum Heck durch die zwei Lagerabschnitte (40) gelagert ist, wobei die zwei Lagerabschnitte (40) so an dem Kopfdeckel (4R, 4L) angeordnet sind, dass ein maximaler Abstand zwischen den zwei Lagerabschnitten (40) in einer Richtung parallel zu einem Wellenmittelpunkt einer Kurbelwelle (8) des Motors (1) länger als ein maximaler Abstand zwischen den zwei Lagerabschnitten (40) in einer Richtung senkrecht zum Wellenmittelpunkt der Kurbelwelle (8) des Motors (1) ist;
wobei das System ferner die elektronische Ausrüstung umfasst und die elektronische Ausrüstung ein beliebiges eines Sensors (14R, 14L), eines elektromagnetischen Ventils und einer Ansteuervorrichtung, die eine Direkteinspritzdüse des Motors (1) ansteuert, beinhaltet.

2. System nach Anspruch 1, wobei:
die elektronische Ausrüstung ein Drucksensor ist, der mit einer Leitung (16R, 16L) verbunden ist, die so angeordnet ist, dass sie entweder mit einem Ansaugsystem oder einem Abgassystem des Motors (1) kommuniziert;
die Halterung (30) dazu ausgelegt ist, den Drucksensor an einer Position vertikal über einem Teil zu halten, an dem die Leitung und das Ansaugsystem oder das Abgassystem miteinander kommunizieren; und
die Halterung (30) einen Bodenwandabschnitt (31), der durch die zwei Lagerabschnitte (40) an dem Kopfdeckel (4R, 4L) befestigt ist, und einen Seitenwandabschnitt (35) umfasst, der sich von dem Bodenwandabschnitt (31) vertikal nach oben erstreckt und den Drucksensor hält.

3. System nach Anspruch 2, wobei der Bodenwandabschnitt (31) einen Einkerbungsabschnitt (33) beinhaltet, der dazu ausgelegt ist, zu ermöglichen, dass die Leitung (16R, 16L) durch den Einkerbungsabschnitt (33) zwischen den zwei Lagerabschnitten (40) hindurchgeht.

4. System nach Anspruch 2 oder 3, wobei die zwei Lagerabschnitte (40) einen elastischen Körper beinhalten, der zwischen dem Kopfdeckel (4R, 4L) und dem Bodenwandabschnitt (31) angeordnet ist.

## Revendications

1. Système, comprenant :
un couvre-culasse (4R, 4L) pour un moteur (1) ; et
un mécanisme de fixation (20R, 20L) pour équipement électronique pour le moteur (1), le mécanisme de fixation (20R, 20L) comprenant :
un support (30) conçu pour maintenir l'équipement électronique ; et
deux parties de support (40) conçues pour supporter élastiquement le support (30) par rapport au couvre-culasse (4R, 4L) du moteur (1), le support (30) étant supporté par une seule des parties de support (40) par rapport à la vibration du moteur (1) dans la direction droite-gauche tandis que le support (30) est supporté par les deux parties de support (40) par rapport à la vibration du moteur (1) dans la direction avant-arrière, les deux parties de support (40) étant situées sur le couvre-culasse (4R, 4L) de sorte qu'une distance maximale entre les deux parties de support (40) dans une direction parallèle à un centre d'arbre d'un vilebrequin (8) du moteur (1) soit supérieure à une distance maximale entre les deux parties de support (40) dans une direction perpendiculaire au centre d'arbre du vilebrequin (8) du moteur (1) ;
le système comprenant en outre l'équipement électronique et l'équipement électronique comprenant l'un quelconque parmi un capteur (14R, 14L), une électrovanne, et un dispositif d'entraînement entraînant un injecteur à injection directe du moteur (1).

2. Système selon la revendication 1,
l'équipement électronique étant un capteur de pression relié à un tuyau (16R, 16L) qui est conçu pour communiquer soit avec un système d'admission soit avec un système d'échappement du moteur (1) ;
le support (30) étant conçu pour maintenir le capteur de pression à une position verticalement au-dessus d'une partie où le tuyau et le système d'admission ou le système d'échappement communiquent entre eux ; et
le support (30) comprenant une partie de paroi inférieure (31) fixée au couvre-culasse (4R, 4L) par les deux parties de support (40) et une partie de paroi latérale (35) qui s'étend verticalement vers le haut à partir de la partie de paroi inférieure (31) et maintient le capteur de pression.

3. Système selon la revendication 2, la partie de paroi inférieure (31) comprenant une partie encoche (33) conçue pour laisser le tuyau (16R, 16L) de passer à travers la partie encoche (33) entre les deux parties de support (40).

4. Système selon la revendication 2 ou 3, les deux parties de support (40) comprenant un corps élastique interposé entre le couvre-culasse (4R, 4L) et la partie de paroi inférieure (31).
